# EUROPÄISCHE PATENTSCHRIFT

(11) **EP 0 914 934 B1**
(45) Veröffentlichungstag und Bekanntmachung des Hinweises auf die Patenterteilung: **24.08.2005**
(21) Anmeldenummer: 98119408.7
(22) Anmeldetag: 14.10.1998
(51) Int. Cl.: B29C 59/02

(54) **Verfahren und Vorrichtung zum Prägen von Materialien**
Method and apparatus for embossing materials
Procédé et dispositif pour l'emboutissage de matières

(30) Priorität: 06.11.1997 DE 19749106
(43) Veröffentlichungstag der Anmeldung: 12.05.1999
(73) Patentinhaber: PAUL KIEFEL GMBH, D-83395 Freilassing (DE)
(72) Erfinder: Berger, Rudolf, 83395 Freilassing (DE); Hinterseer, Heinz, 83395 Freilassing (DE)
(74) Vertreter: Zmyj, Erwin

(56) Entgegenhaltungen:
- DE-A- 1 479 758
- DE-A- 1 779 696
- DE-A- 2 235 588
- DE-C- 741 506
- DE-C- 917 503
- US-A- 2 463 370
- US-A- 3 832 111

## Beschreibung

Die Erfindung bezieht sich auf ein Verfahren zum Prägen von Materialien mit zumindest einem Anteil an einem Kunststoff, der bei Erwärmung in einen erweichten Zustand überführbar ist. Die Erfindung bezieht sich auch auf eine Vorrichtung zur Durchführung des Verfahrens.

Es ist bereits aus der DE-A-2 235 588 ein Verfahren zum Prägen von Schriftzügen in Kunststoffolien mittels Hochfrequenz bekannt. Der Einsatz dieses Verfahrens ist jedoch nur bei polaren Kunststoffen möglich, zum Beispiel bei ABS, PVC, TPU usw.

Weiterhin ist es bekannt, den Prägevorgang mittels eines ständig erhitzten Prägewerkzeuges durchzuführen, bei welchem die Erwärmung der Kunststoffolie und das anschließende Prägen mittels des erhitzten Prägewerkzeuges in einem Arbeitsgang erfolgt. Nachteilig bei einem solchen Verfahren ist die Tatsache, daß die durch Prägen verformte Folie nicht unter Beibehaltung des Prägedruckes abkühlen kann, weil das Prägewerkzeug heiß bleibt. Hierdurch lassen sich weder besonders scharfkantige Prägekonturen noch eine exakte Beibehaltung der Prägekonturen bei einer späteren längeren Einwirkung erhöhter Temperaturen erzielen. Solche längeren Einwirkungen höherer Temperaturen treten beispielsweise im Innenraum von Kraftfahrzeugen auf, so daß dort eingesetzte Kunststoffolien mit entsprechenden Prägungen nachteilig beeinflußt werden.

Aus der US-A-3 832 111 ist eine Vorrichtung bekannt, bei der ein vorgegebenes Muster auf eine Kunststofffolie übertragen werden soll, wobei die Erhitzung dieser Folie in einem hochfrequenten Feld erfolgt. Die Erhitzung erfolgt gleichzeitig mit der Druckanwendung, wobei die Pressplatten, die das Formwerkzeug aufnehmen, ständig gekühlt werden, um einen kontrollierten Fluss des erhitzten Materials zu gewährleisten. Das zu prägende Material wird nicht durch Kontaktwärme des Prägestempels, sondern durch eine zusätzliche Einrichtung, nämlich einen Generator zur Erzeugung eines hochfrequenten Feldes erhitzt. Der Einsatz dieses Verfahrens ist jedoch nur bei polaren Kunststoffen möglich und erfordert außerdem einen erhöhten technischen Einsatz.

Aus der DE-A-17 79 696 ist es bekannt, einen Pressvorgang durchzuführen, um eine Kunstharzfolie mit einer spiegelähnlichen, glänzenden Oberfläche zu erzielen. Hierzu werden Pressplatten erwärmt, wobei die Kunstharzfolie bereits zu Beginn des Anwärmvorganges zwischen die Polierplatten gelegt wird. Wenn die Polierplatte die Vorwärmtemperatur von 180 °C erreicht hat, wird der Heizstrom abgeschalten und der Prägedruck erhöht. Hierauf wird eine Kühlung vorgenommen. Wesentlich ist die Tatsache, dass das zu beeinflussende Material bei dem Pressdruck solange erwärmt wird, bis die notwendige Temperatur erreicht wird. Dies erfordert einen erhöhten Zeitaufwand.

Aufgabe der Erfindung ist es, ein Verfahren und eine Vorrichtung bereitzustellen, mit deren Hilfe es möglich ist, Prägungen von Materialien mit zumindest einem Anteil an einem Kunststoff bei einem geringen technischen und zeitlichen Aufwand durchzuführen, der bei Erwärmung in einen erweichten Zustand überführbar ist, wobei eine scharfkantige Kontur und eine dauerhafte Beständigkeit auch bei höheren Temperatureinwirkungen erzielbar ist.

Diese Aufgabe wird hinsichtlich des Verfahrens durch die Merkmale des Anspruchs 1 und hinsichtlich der Vorrichtung durch die Merkmale des Anspruchs 17 gelöst.

Das Prägeverfahren ist vorzugsweise jedoch nicht ausschließlich für das Prägen von Schriftzügen, Symbolen und Sollbruchlinien bei Behältnissen für Airbags vorgesehen.

Als prägefähige Materialien können Polyolefine, technische und biologisch abbaubare Kunststoffe sowie deren E-Modifikationen und organische Stoffe betrachet werden. Sie können vollständig oder anteilig aus thermoplastischen Komponenten bestehen sowie Fasern und Füllstoffe mit einem Anteil bis 99% beinhalten. Fasern und Füllstoffe können organisch und/oder anorganisch und/oder synthetisch und/oder natürlich sein. Ebenso sind duroplastische Verbunde mit thermoplastischem Anteil prägefähig. Diese Materialien können als Folien, Vliese, Teppische, Textilien oder in anderer Halbzeuggestalt , wie z.B. Platten, Spritzgußteile, usw., vorliegen sowie aus Verbunden der genannten Materialien mit Schäumen aus thermoplastischen Kunststoffen oder Schäumen mit thermoplastischem und/oder duroplastischem Kunststoffanteil bestehen.

Bei dem zweiten der beiden Verfahren wird das zu prägende Material bis auf eine noch näher zu erläuternde Übergangszone, die im Bedarfsfalle ebenfalls von der Erwärmung erfaßt wird, ausschließlich in dem durch den Prägevorgang zu beeinflußenden Bereich auf die notwendige Temperatur gebracht, wobei der Prägevorgang gleichzeitig durch Einwirken von Druck und einer extremen Abkühlwirkung durchgeführt wird. Die anzuwendende Prägetemperatur hängt bei beiden Verfahren vom zu prägenden Material ab. Bei Polyolefinen liegt diese Temperatur im/oder über dem Kristallitschmelzbereich TK des jeweiligen Kunststoffs. Bei amorphen Kunststoffen oder Elastomeren liegt diese Temperatur im/oder über dem Erweichungs- bzw. Schmelzbereich TS des jeweiligen Kunststofftyps. Diese Temperaturen können der Fachliteratur beispielsweise "die Kunststoffe und ihre Eigenschaften" - Hans Domininghaus - VDI Verlag, entnommen werden. Durch die Erwärmung des zu prägenden Bereiches auf die jeweils entsprechend dem Kunststofftyp zu bestimmende Temperatur und das Prägen nach der zweiten Variante des erfindungsgemäßen Verfahrens, wird insbesondere durch die hohe Heizleistung sowie durch die starke Abkühlwirkung des Prägewerkzeuges erreicht, daß die durch das Prägen entstehenden Konturen besonders prägnant ausfallen und eine hohe Wärmeformbeständigkeit aufweisen. Dieselben guten Ergebnisse lassen sich auch durch das Verfahren entsprechend der ersten Variante erzielen, denn entscheidend für die hohe Prägeprägnanz und die Formbeständigkeit ist, wie auch bei der zweiten Variante, das Abkühlen des geprägten Bereiches in Kontakt mit dem Prägewerkzeug, und zwar jeweils ausgehend vom Schmelzbereich des zu prägenden Materials. Diese Wärmeformbeständigkeit ist auf eine Umwandlung des kristallinen Anteiles bzw. der kristallinen Struktur bei Polyolefinen zurückzuführen. Eine derartige Umstrukturierung des Molekülverbundes führt zu einer wesentlich verringerten Rückstellung der Prägung durch eingefrorene Spannungen. Dies ist insbesondere für Innenverkleidungen von Kraftfahrzeugen wichtig, bei denen durch Sonneneinstrahlung hohe Temperaturen im Innenraum des Kraftfahrzeuges erreicht werden. Da die Erwärmung bei beiden Verfahrensvarianten im wesentlichen auf den zu prägenden Bereich beschränkt ist, können bereits verformte Teile noch nachträglich mit einer Prägung versehen werden, ohne daß die Formgebung des aus Kunststoff hergestellten Teiles beeinträchtigt wird.

Die angestrebte Prägeprägnanz wird in vorteilhafter Weise noch dadurch gesteigert, daß die Prägegeschwindigkeit kleiner ist, als dies der möglichen Fließgeschwindigkeit des zu prägenden Materials bei der gerade herrschenden Temperatur und dem gerade vorherrschenden Prägedruck entspricht, der von 0 bei Prägebeginn auf einen von der Oberflächentemperatur und der Materialbeschaffenheit des zu prägenden Materials abhängigen End-Prägedruck gesteigert wird. Hierdurch wird der bereits beschriebenen Umstrukturierung des Materials während des Prägevorganges genügend Zeit gelassen, um eine exakte Anpassung an das Prägewerkzeug zu erreichen. Außerdem wird hierdurch der erzielte Zustand besser stabilisiert, als wenn man mit sehr hohen Prägegeschwindigkeiten arbeiten würde. Der beim Prägevorgang eingestellt End-Prägedruck kann in vorteilhafter Weise mindestens 10 Newton/cm² betragen und sollte, da materialabhängig, durch einen Versuch festgelegt werden.

Die Erwärmung des zu prägenden Bereiches kann durch IR-Strahler durch ein erhitztes gasförmiges Medium oder durch eine Kontaktheizung erfolgen.

Damit Spannungen zwischen dem sehr hoch erhitzten Bereich und den anschließenden Randbereichen vermieden werden, ist es zweckmäßig, bei der Erwärmung des zu prägenden Bereiches in dem Randbereich desselben eine Übergangszone mit allmählich abfallender Temperatur einzustellen. Hierdurch wird nicht nur ein Spannungsfeld abgebaut, sondern auch eine Wulstbildung um den geprägten Bereich herum vermieden. Bei der Anwendung von IR-Strahlern, aber auch bei Erwärmen mittels erhitzter gasförmiger Medien ist es besonders vorteilhaft, wenn zur Steuerung der örtlichen Verteilung der Wärmeeinwirkung auf das zu prägende Material eine Blende verwendet wird. Diese Blende kann im Randbereich durch geeignete Maßnahmen für die IR-Strahlung durchlässig gemacht werden, um die Übergangszone mit allmählich abfallender Temperatur einstellen zu können.

Die schroffe Abkühlung während des Prägevorganges, die auf die Wärmestandfestigkeit des geprägten Bereiches wesentlichen Einfluß hat, erfolgt erfindungsgemäß mittels eines kühlbaren Prägewerkzeuges. Üblicherweise genügt es, wenn die Prägung mittels eines massiven Werkzeuges erfolgt. Wenn dagegen eine noch stärkere Ausprägung von scharfkantigen Konturen gewünscht ist und wenn bei geringen Drücken eine materialschonende Verarbeitung erforderlich ist und trotzdem eine scharfe Ausformung der Prägung erzielt werden soll, so ist dies errreichbar, wenn in Weiterbildung der Erfindung die Prägung mittels eines luftdurchlässigen Prägewerkzeuges erfolgt. Die vorteilhafte Wirkung wird dadurch erzielt, daß die zwischen dem zu prägenden Material und dem Prägewerkzeug eingeschlossene Luft durch das Prägewerkzeug hindurch entweichen kann. Um hier eine möglichst scharfkantige Prägung zu erzielen, ist es vorteilhaft, wenn das Prägewerkzeug eine mikroporöse Struktur aufweist, so daß praktisch an allen Stellen des Prägewerkzeuges eine Abführung der eingeschlossenen Luft möglich ist, was dazu führt, daß sich das zu prägende Material ohne Zwischenlage eines komprimierten Luftpolsters unmittelbar an das Prägewerkzeug anlegen und dessen Kontur annehmen kann. Der Effekt der Abführung der eingeschlossenen Luft kann in Weiterbildung der Erfindung noch dadurch gesteigert werden, daß durch Anwendung eines Unterdruckes am Prägewerkzeug das zu prägende Material an das Werkzeug angesaugt wird.

Um die angestrebte, optisch einwandfreie Ausbildung der erwünschten Prägung zu erzielen, ist es vorteilhaft, wenn in Weiterbildung der Erfindung zwischen der zu prägenden Oberfläche und dem Prägewerkzeug ein Trennmittel eingesetzt wird. Dieses führt dazu, daß die bei der Berührung mit dem gekühlten Prägewerkzeug erstarrende Kunststoffschicht nicht anhaftet. Der Kunststoff kann sich den Konturen des Prägewerkzeuges anpassen und ein örtliches Anhaften an dem Prägewerkzeug, welches zu Überdehnungen im Prägebereich oder in benachbarten Bereichen Anlaß gibt, wird vermieden.

Um eine Anpassung an die jeweiligen Verhältnisse, insbesondere die zu prägenden Materialien, zu erzielen, kann in vorteilhafter Weiterbildung der Erfindung von den den Prägevorgang beeinflussenden Parametern mindestens einer veränderbar sein. Die den Prägevorgang beeinflussenden Parameter sind der Anpreßdruck, die Heiztemperatur, die Heizzeit sowie die Prägezeit bzw. Prägegeschwindigkeit, die, da materialabhängig, durch einen Versuch ermittelt werden können.

Sofern es sich um einfache Teile handelt, die von beiden Seiten zugänglich sind, kann sowohl die Wärmeeinwirkung als auch die Druckeinwirkung von beiden Seiten der Kunststoffolie erfolgen.

Die Vorrichtung zur Durchführung des Verfahrens ist gekennzeichnet durch eine Aufnahmevorrichtung für das zu prägende Teil, eine Heizeinrichtung für den zu prägenden Bereich sowie eine Prägeeinrichtung mit kühlbarem Prägewerkzeug.

Diese Vorrichtung kann sowohl stationär als auch verfahrbar angeordnet sein, was in erster Linie von der Größe der Bauteile abhängt, die mit einer Prägung versehen werden sollen.

Als Heizeinrichtung kann entweder ein Infrarotstrahler oder ein Heißluftgebläse dienen. Es ist aber auch möglich eine Heizeinrichtung vorzusehen, die als Kontaktheizung ausgebildet ist. Diese Heizeinrichtung benötigt keine Blende zur Abdeckung des Bereiches, der an den zu prägenden Bereich angrenzt. Im Falle der Anwendung eines IR-Strahlers oder eines Heißluftgebläses umfaßt die Vorrichtung eine Blende, die die Wärmeeinwirkung auf den zu prägenden Bereich begrenzt.

In vorteilhafter Weise besteht das Prägewerkzeug aus einem mikroporösen Material, beispielsweise aus mikroporösen Galvanos, Sinterkörpern oder Sinterbronze. Die Verwendung eines Prägewerkzeuges aus einem mikroporösen Werkstoff hat den Vorteil, daß die zwischen dem Prägewerkzeug und dem zu prägenden Material eingeschlossene Luft entweichen kann. Dieser Vorgang kann auch dadurch unterstützt werden, wenn in weiterer Ausgestaltung der Erfindung das Prägewerkzeug mit einer Unterdruckquelle in Verbindung steht, die einen Unterdruck an der Werkstückanlageseite erzeugt. Diese Lufteinschlüsse können dann durch den Unterdruck abgesaugt werden und außerdem wird ein äußerst exaktes Anlegen des zu prägenden Materials an das Prägewerkzeug sichergestellt.

Die Erfindung wird nachfolgend anhand von in der Zeichnung dargestellten Ausführungsbeispielen näher erläutert. In der Zeichnung zeigen:
- **Figur 1:**: einen Schnitt durch ein aus einer Folie hergestelltes Formteil auf einer Teileaufnahme in einer Heizstation;
- **Figur 2:**: das Formteil mit Teileaufnahme in einer Prägestation;
- **Figur 3:**: einen Schnitt durch ein aus Folie und Trägerteil bestehendes Formteil in der Heizstation; und
- **Figur 4:**: das Formteil aus Figur 3 in einer Prägestation;

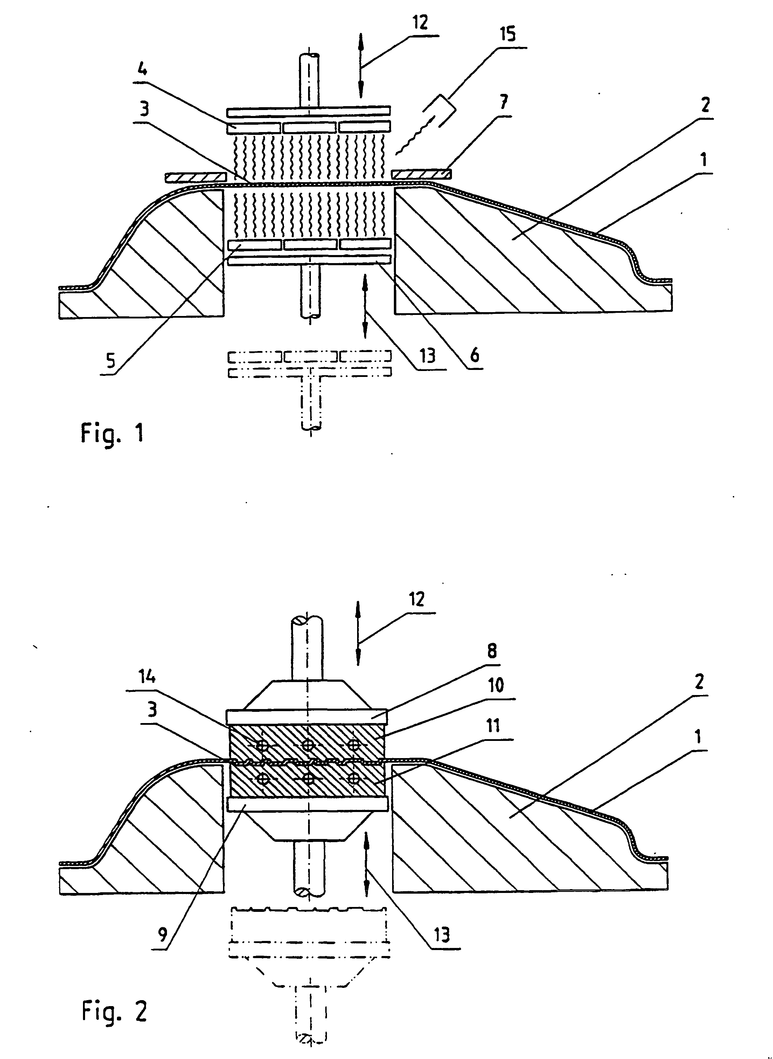

In den Figuren 1 und 2 sind die aufeinanderfolgenden Verfahrensschritte des Aufheizens und Prägens eines aus einer Folie hergestellten Formteiles 1 dargestellt, welches auf einer Teileaufnahme 2 aufgenommen und mit dieser zu den einzelnen Stationen der Vorrichtung verfahrbar ist. Die Verfahrbarkeit des Formteiles mit der Teileaufnahme ist vorgesehen, wenn es sich um kleinere Teile handelt. Bei größeren Teilen kann es vorteilhaft sein, die Teileaufnahme 2 stationär anzuordnen und die noch zu beschreibende Heizeinrichtung und den Prägestempel entsprechend zu bewegen.

Bei der Darstellung in den Figuren 1 und 2 ist die Teileaufnahme in dem zu prägenden Bereich 3 ausgenommen, so daß das Formteil 1 mittels Heizstrahlern 4 und 5 sowohl von der Oberseite als auch von der Unterseite erhitzt werden kann. Um nun ausschließlich den Bereich 3 zu erwärmen, ist die Teileaufnahme 2 mit einer entsprechend großen Aussparung 6 versehen, so daß die verbleibende Teileaufnahme 2, auf der das Formteil 1 aufliegt, dieses abschirmt. An der Oberseite ist eine Blende 7 vorgesehen, die den Bereich außerhalb des zu prägenden Bereiches 3 abdeckt.

In dieser Station wird das Folienmaterial des Formkörpers 1 auf eine Temperatur zwischen dem Erweichungsbereich und dem Zersetzungsbereich, in vielen praktischen Fällen auf eine Temperatur zwischen 150°C bis 250°C erhitzt, worauf dann das Formteil zusammen mit der Teileaufnahme 2 in eine Prägestation entsprechend Figur 2 gebracht werden. Dort ist die aus den Heizstrahlern 4 und 5 bestehende Heizeinrichtung entfernt und durch eine Prägeeinrichtung ersetzt, die einen Oberstempel 8 und einen Unterstempel 9 mit entsprechenden Werkzeugen 10 und 11 umfaßt, die ebenso wie die Teile 4 und 5 der Heizeinrichtung entsprechend den Doppelpfeilen 12 und 13 verfahrbar sind. Die Prägewerkzeuge 10 und 11 sind mit Kühlrohren 14 versehen und entsprechend kühlbar, so daß während der Druckanwendung mit einer Verformungskraft von ungefähr 10 Newton/cm² gleichzeitig eine schroffe Abkühlung des erhitzten Folienmaterials erfolgt. Das eingeprägte Muster oder der eingeprägte Schriftzug kann sich dann nicht mehr verändern, weil er während des Prägevorgangs gleichzeitig auf eine Temperatur abgekühlt wird, bei welcher eine nachträgliche Veränderung nicht mehr eintritt. Der rasche Übergang von einer starken Erhitzung auf einen abgekühlten Zustand innerhalb sehr kurzer Zeit führt auch dazu, daß der so durch dieses Prägen veränderte Folienbereich späteren Wärmeeinwirkungen standhält, das heißt, daß die einmal geprägte Struktur ihre Formgebung auch bei Einwirkung höherer Temperaturen beibehält. Solche höhere Temperaturen treten im Innenraum eines Kraftfahrzeuges auf, wenn dieses im geschlossenen Zustand längere Zeit der Sonneneinstrahlung ausgesetzt wird. In Figur 1 ist mit 15 ein Sensor bezeichnet, mit dessen Hilfe die einzustellende Temperatur der Folie überwacht werden kann.

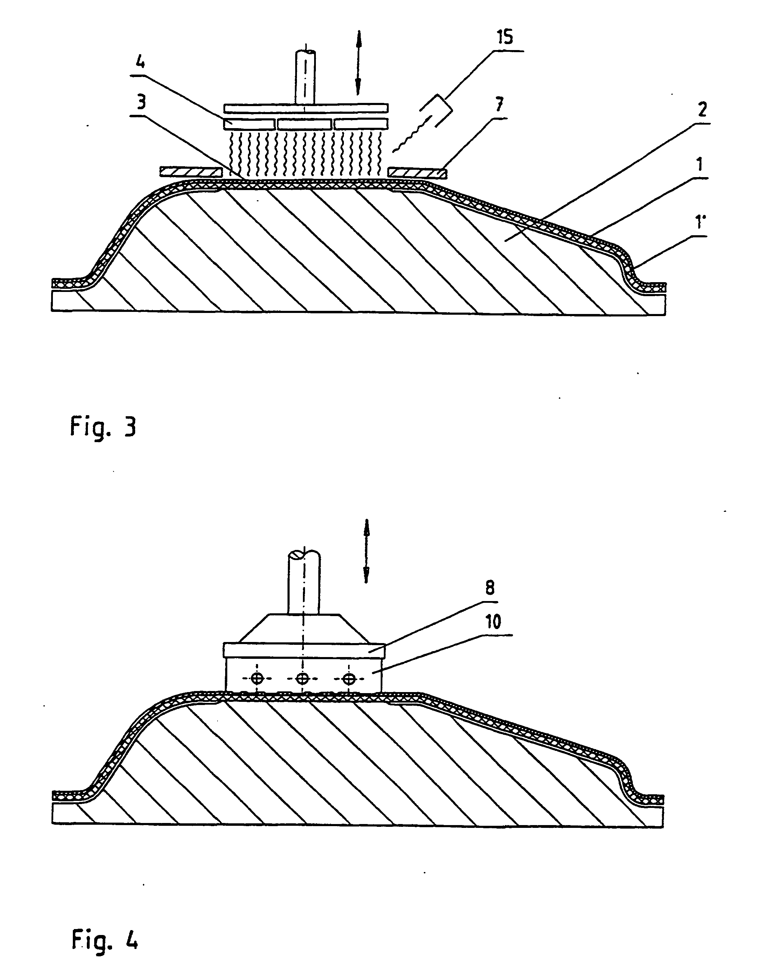

Die Ausführungsform nach den Figuren 3 und 4 unterscheidet sich gegenüber derjenigen nach den Figuren 1 und 2 dadurch, daß das aus Kunststoff hergestellte Formteil 1 auf einem Trägerteil 1' aufkaschiert ist, so daß eine Prägung nur von der Oberseite, das heißt von der Folienseite her, möglich ist. Aus diesem Grunde ist auch die Teileaufnahme 2 ohne Aussparung ausgebildet und die Erwärmung der Folie im Bereich 3 erfolgt nur durch einen oberen Heizstrahler 4, der den Bereich 3 innerhalb der Blende 7 aufheizt, wobei, wie auch in Figur 1, der Aufheizvorgang durch den Sensor 15 überwacht wird. Nach dem Aufheizen wird dieser Bereich durch den Oberstempel 8 mittels des Prägewerkzeuges 10 verformt. Da hier der Unterstempel 9 mit dem Unterwerkzeug 11 entsprechend Figur 2 fehlt, muß die Teileaufnahme 2 den notwendigen Gegendruck aufnehmen können.

In den Figuren sind die jeweils notwendigen Aufnahmetische oder Transportvorrichtungen nicht dargestellt, da es sich hier um Einrichtungen bekannter Art handelt. Die Vorrichtung nach der vorliegenden Erfindung, nämlich die Heizeinrichtung und die Prägeeinrichtung, können als selbständige Vorrichtungen ausgeführt sein oder sie können in eine Anlage zur Herstellung von Formteilen, wie zum Beispiel Innenverkleidungen für Kraftfahrzeuge, integriert sein.

Die Figur 5b zeigt ein zu prägendes Teil 23 auf einer Teileaufnahme 24 und Aufnahmeplatten 25 und 26 einer Prägestation. Oberhalb des zu prägenden Teiles 23 ist das aufgeheizte Prägewerkzeug 21 mit Aufnahmeplatte 22 vorgesehen, welches von einer Kühlplatte 27 überlagert ist, die sich zwischen einem nicht dargestellten Pressenstempel und der Aufnahmeplatte 22 des Prägewerkzeuges 21 befindet. Durch diese Kühlplatte 27 wird während des Prägevorganges das Prägewerkzeug 21 von seiner Rückseite aus gekühlt, so daß nach Beendigung des Prägevorganges, das heißt nach Erreichen der notwendigen Eindringtiefe des Prägewerkzeuges in das zu prägende Material, die Kühlung des vorher bis zum Erweichungszustand aufgeheizten Materials einsetzt, so daß dieses Material in Berührung mit dem Prägewerkzeug abkühlen kann, wodurch die gewünschte Formgebung stabilisiert wird.

## Patentansprüche

1. Verfahren zum Prägen von Materialen mit zumindest einem Anteil an einem Kunststoff, der bei Erwärmung in einen erweichten Zustand überführbar ist, **dadurch gekennzeichnet, daß** das zu prägende Material zumindest in dem durch Prägen zu verformenden Bereich auf eine Temperatur erwärmt wird, die bei Polyolefinen zumindest dem Kristallitschmelzbereich und bei amorphen Kunststoffen oder Elastomeren zumindest dem Erweichungsbereich entspricht und daß nach dem Erwärmen der Prägevorgang durch Druckeinwirkung bei gleichzeitig schroffer Abkühlung des zu prägenden Bereiches erfolgt.

2. Verfahren nach Anspruch 1, **dadurch gekennzeichnet, daß** die Prägegeschwindigkeit kleiner ist als dies der möglichen Fließgeschwindigkeit des zu prägenden Materials bei der gerade vorherrschenden Temperatur und dem gerade vorherrschenden Prägedruck entspricht, der von 0 bei Prägebeginn auf einen von der Oberflächentemperatur und der Materialbeschaffenheit des zu prägenden Materials abhängigen End-Prägedruck gesteigert wird.

3. Verfahren nach Anspruch 1 oder 2, **dadurch gekennzeichnet, daß** der beim Prägevorgang eingestellte End-Prägedruck mindestens 10 Newton/cm² beträgt.

4. Verfahren nach einem der Ansprüche 1 bis 3, **dadurch gekennzeichnet, daß** die Erwärmung des zu prägenden Bereiches durch IR-Strahler erfolgt.

5. Verfahren nach einem der Ansprüche 1 bis 3, **dadurch gekennzeichnet, daß** die Erwärmung des zu prägenden Bereiches durch ein erhitztes gasförmiges Medium erfolgt.

6. Verfahren nach einem der Ansprüche 1 bis 3, **dadurch gekennzeichnet, daß** die Erwärmung des zu prägenden Bereiches durch eine Kontaktheizung erfolgt.

7. Verfahren nach einem der Ansprüche 4 bis 6, **dadurch gekennzeichnet, daß** bei der Erwärmung des zu prägenden Bereiches in dem Randbereich desselben eine Übergangszone mit allmählich abfallender Temperatur eingestellt wird.

8. Verfahren nach einem der Ansprüche 1 bis 7, **dadurch gekennzeichnet, daß** zur Steuerung der örtlichen Verteilung der Wärmeeinwirkung auf das zu prägende Material eine Blende verwendet wird.

9. Verfahren nach einem der Ansprüche 1 bis 8, **dadurch gekennzeichnet, daß** die Prägung mittels eines kühlbaren Prägewerkzeuges erfolgt.

10. Verfahren nach einem der Ansprüche 1 bis 9, **dadurch gekennzeichnet, daß** die Prägung mittels eines massiven Werkzeuges erfolgt.

11. Verfahren nach einem der Ansprüche 1 bis 9, **dadurch gekennzeichnet, daß** die Prägung mittels eines luftdurchlässigen Prägewerkzeuges erfolgt.

12. Verfahren nach Anspruch 11, **dadurch gekennzeichnet, daß** durch Anwendung eines Unterdruckes am Prägewerkzeug das zu prägende Material an das Prägewerkzeug angesaugt wird.

13. Verfahren nach einem der Ansprüche 1 bis 12, **dadurch gekennzeichnet, daß** zwischen der zu prägenden Oberfläche und dem Prägewerkzeug ein Trennmittel eingesetzt wird.

14. Verfahren nach einem der Ansprüche 1 bis 13, **dadurch gekennzeichnet, daß** von den den Prägevorgang beeinflussenden Parametern mindestens einer veränderbar ist.

15. Verfahren nach Anspruch 14, **dadurch gekennzeichnet, daß** die den Prägevorgang beeinflussenden Parameter der Anpreßdruck, die Heiztemperatur, die Heizzeit sowie die Prägezeit bzw. Prägegeschwindigkeit sind.

16. Verfahren nach einem der Ansprüche 1 bis 8 oder 10 bis 15, **dadurch gekennzeichnet, daß** sowohl die Wärmeeinwirkung als auch die Druckeinwirkung von beiden Seiten der Teile erfolgt.

17. Vorrichtung zur Durchführung des Verfahrens nach einem der Ansprüche 1 bis 16, **gekennzeichnet durch** eine Aufnahmevorrichtung (2) für das zu prägende Teil (1; 1,1'), eine Heizeinrichtung (4, 5) für den zu prägenden Bereich (3) sowie eine Prägeeinrichtung (8, 10, 9, 11) mit kühlbarem Prägewerkzeug (10, 11).

18. Vorrichtung nach Anspruch 17, **dadurch gekennzeichnet, daß** die Heizeinrichtung Infrarotstrahler umfaßt.

19. Vorrichtung nach Anspruch 17, **dadurch gekennzeichnet, daß** die Heizeinrichtung ein Heißluftgebläse umfaßt.

20. Vorrichtung nach Anspruch 17, **dadurch gekennzeichnet, daß** die Heizeinrichtung als Kontaktheizung ausgebildet ist.

21. Vorrichtung nach einem der Ansprüche 17 bis 19, **dadurch gekennzeichnet, daß** sie eine Blende (7) umfaßt, die die Wärmeeinwirkung auf den zu prägenden Bereich (3) begrenzt.

22. Vorrichtung nach einem der Ansprüche 17 bis 21, **dadurch gekennzeichnet, daß** das Prägewerkzeug aus einem massiven Werkstoff besteht.

23. Vorrichtung nach einem der Ansprüche 17 bis 21, **dadurch gekennzeichnet, daß** das Prägewerkzeug aus einem mikroporösen Werkstoff besteht.

24. Vorrichtung nach Anspruch 23, **dadurch gekennzeichnet, daß** das Prägewerkzeug mit einer Unterdruckquelle in Verbindung steht, die einen Unterdruck an der Werkstückanlageseite erzeugt.

## Claims

1. Method of embossing materials having at least one portion of plastic which can be transformed into a softened state during heating, **characterized in that** the material to be embossed, at least in the region to be deformed by embossing, is heated to a temperature which in the case of polyolefins corresponds at least to the crystallite melting range and in the case of amorphous plastics or elastomers corresponds at least to the softening range, and **in that**, after the heating, the embossing operation is carried out by the action of pressure with at the same time abrupt cooling of the region to be embossed.

2. Method according to Claim 1, **characterized in that** the embossing speed is less than that which corresponds to the possible flow speed of the material to be embossed at the temperature prevailing at that time and the embossing pressure prevailing at that time, which is increased from 0 at the start of embossing to a final embossing pressure which depends on the surface temperature and the material properties of the material to be embossed.

3. Method according to Claim 1 or 2, **characterized in that** the final embossing pressure set at the start of embossing is at least 10 Newtons/cm².

4. Method according to one of Claims 1 to 3, **characterized in that** the region to be embossed is heated by infrared radiators.

5. Method according to one of Claims 1 to 3, **characterized in that** the region to be embossed is heated by a heated gaseous medium.

6. Method according to one of Claims 1 to 3, **characterized in that** the region to be embossed is heated by contact heating.

7. Method according to one of Claims 4 to 6, **characterized in that**, during the heating of the region to be embossed, a transition zone having a gradually falling temperature is set in the marginal region of the said region.

8. Method according to one of Claims 1 to 7, **characterized in that** a diaphragm is used to control the local distribution of the action of heat on the material to be embossed.

9. Method according to one of Claims 1 to 8, **characterized in that** the embossing is effected by means of a coolable embossing tool.

10. Method according to one of Claims 1 to 9, **characterized in that** the embossing is effected by means of a solid tool.

11. Method according to one of Claims 1 to 9, **characterized in that** the embossing is effected by means of an air-permeable embossing tool.

12. Method according to Claim 11, **characterized in that** the material to be embossed is drawn onto the embossing tool by application of a vacuum at the embossing tool.

13. Method according to one of Claims 1 to 12, **characterized in that** a separating agent is inserted between the surface to be embossed and the embossing tool.

14. Method according to one of Claims 1 to 13, **characterized in that**, of the parameters influencing the embossing operation, at least one is variable.

15. Method according to Claim 14, **characterized in that** the parameters influencing the embossing operation are the contact pressure, the heating temperature, the heating time and the embossing time or embossing speed.

16. Method according to one of Claims 1 to 8 or 10 to 15, **characterized in that** both the action of heat and the action of pressure take place from both sides of the parts.

17. Apparatus for carrying out the method according to one of Claims 1 to 16, **characterized by** a locating fixture (2) for the part (1; 1, 1') to be embossed, a heating arrangement (4, 5) for the region (3) to be embossed, and an embossing arrangement (8, 10, 9, 11) with coolable embossing tool (10, 11).

18. Apparatus according to Claim 17, **characterized in that** the heating arrangement comprises infrared heaters.

19. Apparatus according to Claim 17, **characterized in that** the heating arrangement comprises a hot-air blower.

20. Apparatus according to Claim 17, **characterized in that** the heating arrangement is designed as contact heating.

21. Apparatus according to Claims 17 to 19, **characterized in that** it comprises a diaphragm (7) which limits the action of heat on the region (3) to be embossed.

22. Apparatus according to one of Claims 17 to 21, **characterized in that** the embossing tool consists of a solid material.

23. Apparatus according to one of Claims 17 to 21, **characterized in that** the embossing tool consists of a microporous material.

24. Apparatus according to Claim 23, **characterized in that** the embossing tool is connected to a vacuum source which produces a vacuum at the workpiece bearing side.

## Revendications

1. Procédé pour l'emboutissage de matières comprenant au moins une proportion de plastique qui peut être amenée par chauffage dans un état ramolli, **caractérisé en ce que** la matière à emboutir est réchauffée au moins dans la région à déformer par emboutissage à une température qui correspond pour les polyoléfines au moins à la zone de fusion des cristallites et pour les plastiques amorphes ou les élastomères au moins à la zone de ramollissement et **en ce qu'**après le chauffage, l'opération d'emboutissage a lieu par application de pression avec refroidissement brutal simultané de la zone à emboutir.

2. Procédé selon la revendication 1, **caractérisé en ce que** la vitesse d'emboutissage est inférieure à la vitesse d'écoulement possible de la matière à emboutir à la température appliquée en l'occurrence et à la pression d'emboutissage appliquée en l'occurrence, qui augmente de 0 au début de l'emboutissage jusqu'à une pression d'emboutissage finale dépendant de la température superficielle et de la constitution de la matière à emboutir.

3. Procédé selon la revendication 1 ou 2, **caractérisé en ce que** la pression d'emboutissage finale lors de l'opération d'emboutissage vaut au moins 10 Newton/cm².

4. Procédé selon l'une quelconque des revendications 1 à 3, **caractérisé en ce que** le chauffage de la zone à emboutir est effectué par une source de rayonnement infrarouge.

5. Procédé selon l'une quelconque des revendications 1 à 3, **caractérisé en ce que** le chauffage de la zone à emboutir s'effectue par un milieu gazeux chauffé.

6. Procédé selon l'une quelconque des revendications 1 à 3, **caractérisé en ce que** le chauffage de la zone à emboutir s'effectue par un chauffage par contact.

7. Procédé selon l'une quelconque des revendications 4 à 6, **caractérisé en ce que** lors du chauffage de la zone à emboutir, on ajuste dans la zone marginale de celle-ci une zone de transition avec une température diminuant progressivement.

8. Procédé selon l'une quelconque des revendications 1 à 7, **caractérisé en ce que** pour la commande de la répartition locale de l'application de chaleur sur la matière à emboutir, on utilise un diaphragme.

9. Procédé selon l'une quelconque des revendications 1 à 8, **caractérisé en ce que** l'emboutissage s'effectue au moyen d'un outil d'emboutissage refroidissable.

10. Procédé selon l'une quelconque des revendications 1 à 9, **caractérisé en ce que** l'emboutissage s'effectue au moyen d'un outil massif.

11. Procédé selon l'une quelconque des revendications 1 à 9, **caractérisé en ce que** l'emboutissage s'effectue au moyen d'un outil d'emboutissage perméable à l'air.

12. Procédé selon la revendication 11, **caractérisé en ce que** la matière à emboutir est aspirée sur l'outil d'emboutissage par l'application d'une dépression au niveau de l'outil d'emboutissage.

13. Procédé selon l'une quelconque des revendications 1 à 12, **caractérisé en ce que** l'on insère un élément de séparation entre la surface à emboutir et l'outil d'emboutissage.

14. Procédé selon l'une quelconque des revendications 1 à 13, **caractérisé en ce que** parmi les paramètres influençant l'opération d'emboutissage, au moins un est variable.

15. Procédé selon la revendication 14, **caractérisé en ce que** les paramètres influençant l'opération d'emboutissage sont la pression de compression, la température de chauffage, la durée de chauffage ainsi que la durée de l'emboutissage ou la vitesse d'emboutissage.

16. Procédé selon l'une quelconque des revendications 1 à 8 ou 10 à 15, **caractérisé en ce que** l'application de la chaleur ainsi que l'application de la pression s'effectuent des deux côtés des pièces.

17. Dispositif pour mettre en oeuvre le procédé selon l'une quelconque des revendications 1 à 16, **caractérisé par** un dispositif de réception (2) pour la pièce à emboutir (1 ; 1,1'), un dispositif de chauffage (5, 4) pour la zone à emboutir (3) ainsi qu'un dispositif d'emboutissage (8, 10, 9, 11) avec un outil d'emboutissage refroidissable (10, 11).

18. Dispositif selon la revendication 17, **caractérisé en ce que** le dispositif de chauffage comprend une source de rayonnement infrarouge.

19. Dispositif selon la revendication 17, **caractérisé en ce que** le dispositif de chauffage comprend une soufflante d'air chaud.

20. Dispositif selon la revendication 17, **caractérisé en ce que** le dispositif de chauffage est réalisé sous forme de chauffage par contact.

21. Dispositif selon l'une quelconque des revendications 17 à 19, **caractérisé en ce qu'**il comprend un diaphragme (7) qui limite l'application de la chaleur à la zone à emboutir (3).

22. Dispositif selon l'une quelconque des revendications 17 à 21, **caractérisé en ce que** l'outil d'emboutissage se compose d'un matériau massif.

23. Dispositif selon l'une quelconque des revendications 17 à 21, **caractérisé en ce que** l'outil d'emboutissage se compose d'un matériau microporeux.

24. Dispositif selon la revendication 23, **caractérisé en ce que** l'outil d'emboutissage est en liaison avec une source de dépression qui produit une dépression au niveau du côté d'application contre la pièce.
